# EUROPEAN PATENT SPECIFICATION

(11) **EP 3 470 537 B1**
(45) Date of publication and mention of the grant of the patent: **25.08.2021**
(21) Application number: 18192567.8
(22) Date of filing: 04.09.2018
(51) Int. Cl.: C21D 7/13, B21D 22/02, B21D 22/20, C21D 9/48, C21D 1/18, C21D 1/25, C21D 1/673

(54) **STEEL PLATE MEMBER AND METHOD OF PRODUCING THE STEEL PLATE MEMBER**
STAHLPLATTENELEMENT UND VERFAHREN ZUR HERSTELLUNG DES STAHLPLATTENELEMENTS
ÉLÉMENT DE PLAQUE D'ACIER ET PROCÉDÉ DE PRODUCTION DE L'ÉLÉMENT DE PLAQUE D'ACIER

(30) Priority: 11.10.2017 JP 2017197562; 26.04.2018 JP 2018085085
(43) Date of publication of application: 17.04.2019
(73) Proprietor: TOYOTA JIDOSHA KABUSHIKI KAISHA, Toyota-shi, Aichi-ken, 471-8571 (JP)
(72) Inventor: IHARA, Tomoaki, Aichi-ken, 471-8571 (JP); YAMAZAKI, Satoshi, Aichi-ken, 471-8571 (JP); OKUMA, Shinobu, Aichi-ken, 471-8571 (JP)
(74) Representative: J A Kemp LLP

(56) References cited:
- EP-A1- 2 905 346
- EP-A1- 3 323 524
- WO-A1-2011/160209
- WO-A1-2016/046637
- US-A1- 2002 104 591
- MERKLEIN M ET AL: "Herstellung von funktionsoptimierten Bauteilen im Presshärtprozess", STAHL UND EISEN, VERLAG STAHLEISEN, DUSSELDORF, DE, vol. 130, no. 6, 15 June 2010 (2010-06-15) , pages 51-57, XP001558170, ISSN: 0340-4803

## Description

### BACKGROUND OF THE INVENTION

### 1. Field of the Invention

The present invention relates to a steel plate member and a method of producing the steel plate member, and particularly, to a steel plate member including a hard area containing martensite and a soft area containing ferrite and pearlite and a method of producing the steel plate member.

### 2. Description of Related Art

In recent years, for example, as a structural member for a vehicle, in order to improve impact resistance, a steel plate member including a hard area that is resistant to shock and a soft area that absorbs shock has been developed. In Japanese Unexamined Patent Application Publication No. 2012-144773 (JP2012-144773 A), a method in which only a partial area of a steel plate member is heated to a temperature higher than an austenite transformation completion temperature A3 and quenched, and thus a hard area and a soft area are formed on one steel plate member is disclosed.
WO 2016/046637 discloses a method including heating a workpiece to at least 900° C to form austenite in the steel material, hot forming the workpiece, and quenching the formed workpiece to transform the austenite to martensite. The method next includes tempering at least one portion of the quenched workpiece, wherein the tempering step includes simultaneously applying thermal energy and a magnetic field to the workpiece. During the tempering step, the martensite of the steel material transforms to a mixture of ferrite and cementite precipitates. The portions of the steel material subject to the thermomagnetic tempering are also typically free of pearlite and spheroid particles. The remainder of the workpiece is protected during the tempering step to maintain a hard zone including the martensite. The method can also include forming the at least one transition zone by at least partially protecting or tempering certain areas of the workpiece. The areas of the workpiece wherein the transition zones are desired can partially masked or partially tempered, such that they are only exposed to a portion of the magnetic field and/or thermal energy.

### SUMMARY OF THE INVENTION

In the method of producing a steel plate member including a hard area and a soft area disclosed in JP2012-144773 A, when only a partial area of the steel plate member is heated to a temperature higher than the austenite transformation completion temperature A3, a microstructure of the area changes to an austenite single phase. Thus, after quenching, the area becomes a hard area composed of martensite. On the other hand, in an area heated only to a temperature lower than an austenite transformation start temperature A1, austenite does not appear. Thus, even after quenching, the area remains as a soft area composed of ferrite and pearlite as before quenching.

Here, a boundary area between the hard area and the soft area is heated at a temperature between the austenite transformation start temperature A1 and the austenite transformation completion temperature A3, and some of ferrite and pearlite change to austenite. Thus, after quenching, the boundary area has an unstable microstructure in which hard martensite and soft ferrite and pearlite coexist. As a result, cracks are likely to occur in the boundary area between the hard area and the soft area, and local ductility and bendability deteriorate.

The present invention provides a steel plate member in which the occurrence of cracks in a boundary area between a hard area and a soft area is restrained and a method of producing the steel plate member.

An aspect of the invention relates to a method of producing a steel plate member including: quenching a steel plate by heating the steel plate to a temperature which is higher than a first transformation temperature at which austenitization is completed and then cooling the steel plate at a cooling rate higher than an upper critical cooling rate; reheating a second area of the steel plate, without reheating a first area of the steel plate, to a temperature which is higher than a second transformation temperature, at which austenitization starts, and is lower than the first transformation temperature; and cooling the reheated steel plate at a cooling rate lower than a lower critical cooling rate to obtain the steel plate member in which a hard area composed of martensite is formed in the first area, a soft area containing tempered martensite in addition to ferrite and pearlite is formed in the second area, and an area composed of only tempered martensite is formed in a third area between the first area and the second area.

In the method of producing a steel plate member of the above aspect, in the tempering step, the first area of the steel plate is not reheated, and the second area of the steel plate is reheated to a temperature that is higher than a transformation temperature at which austenitization starts and is lower than a transformation temperature at which austenitization is completed. Then, the steel plate is cooled at a cooling rate lower than a lower critical cooling rate. Therefore, a hard area composed of martensite is formed in the first area, a soft area containing tempered martensite in addition to ferrite and pearlite is formed in the second area, and an area composed of only tempered martensite is formed in the third area between the first area and the second area. That is, according to the method of producing a steel plate member of the above aspect, since an unstable microstructure in which the hard martensite and the soft ferrite and pearlite coexist is not formed in the third area, it is possible to restrain the occurrence of cracks in the third area.

In the above aspect, the second area of the steel plate may be reheated by induction heating.

According to the method of producing a steel plate member of the above aspect, it is possible to quickly heat the second area of the steel plate and it is possible to accurately maintain the temperature that is higher than the transformation temperature at which austenitization starts and is lower than the transformation temperature at which austenitization is completed.

In the above aspect, after the steel plate is heated, a press processing may be performed on the steel plate before the steel plate is cooled during quenching.

According to the method of producing a steel plate member of the above aspect, it is possible to obtain a high strength steel plate member by cooling after press molding while spring back occurring in cold press forming is restrained.

In the above aspect, the third area may be heated to a temperature which is lower than the second transformation temperature by heat conduction from the second area being reheated; and a structure of the third area may change from martensite to tempered martensite.

Another aspect of the invention relates to a steel plate member including: a hard area composed of martensite; a soft area containing ferrite and pearlite; and a third area which is formed between the hard area and the soft area, wherein: the soft area further contains tempered martensite; and the third area includes an area composed of only tempered martensite.

In the steel plate member of the above aspect, an area composed of only tempered martensite is formed in the third area, and an unstable microstructure in which the hard martensite and the soft ferrite and pearlite coexist is not formed in the third area. Therefore, according to the steel plate member of the above aspect, it is possible to restrain the occurrence of cracks in the third area.

According to the present invention, it is possible to provide a steel plate member in which the occurrence of cracks in a boundary area between a hard area and a soft area is restrained and a method of producing the steel plate member.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a temperature chart showing a method of producing a steel plate member according to a first embodiment;
FIG. 2 is a schematic plan view showing a change in a microstructure of a steel plate member in a partial tempering step;
FIG. 3 is a schematic plan view of a steel plate member according to the first embodiment;
FIG. 4 is a temperature chart showing a method of producing a steel plate member according to a comparative example of the first embodiment;
FIG. 5 is a schematic plan view of a steel plate member according to the comparative example of the first embodiment;
FIG. 6 is a schematic perspective view of an induction heating device used in a method of producing a steel plate member according to a second embodiment;
FIG. 7 is a temperature chart of induction heating of steel plates with different thicknesses;
FIG. 8 is a temperature chart showing conditions of partial tempering according to an example of the second embodiment;
FIG. 9 is a graph showing a hardness distribution of the steel plate member produced using the method of producing a steel plate member according to the example of the second embodiment;
FIG. 10 is a microstructure picture of the steel plate member produced using the method of producing a steel plate member according to the second embodiment; and
FIG. 11 is a comparison graph showing the hardnesses and limit bending angles of a boundary area 13 of the steel plate member according to the example and a boundary area 23 of the steel plate member according to the comparative example.

### DETAILED DESCRIPTION OF EMBODIMENTS

Specific embodiments in which the present invention is applied will be described below in detail with reference to the drawings. However, the present invention is not limited to the following embodiments. In addition, in order to clarify the description, the following description and drawings are appropriately simplified.

### 1. First embodiment

### 1-1. Method of producing a steel plate member

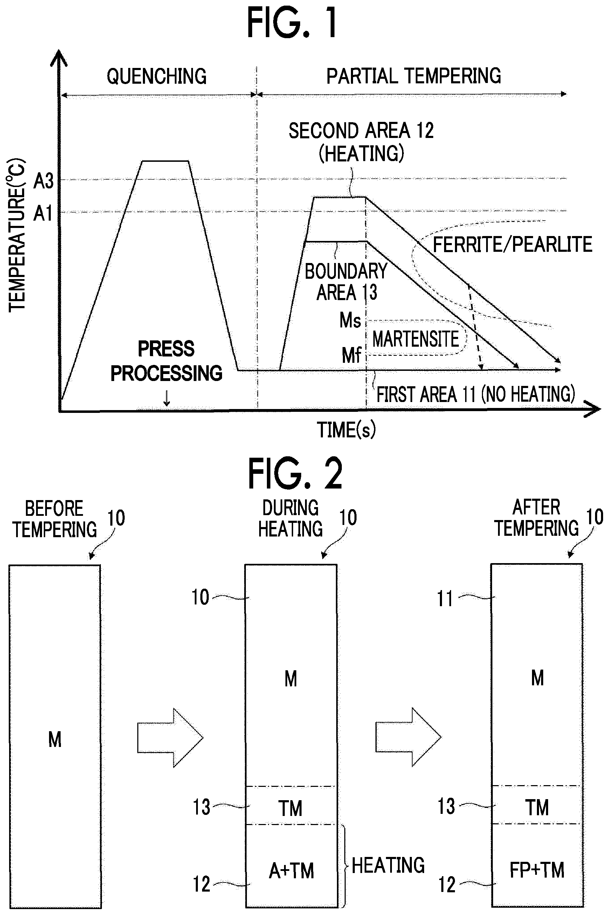

First, a method of producing a steel plate member according to a first embodiment will be described with reference to FIG. 1. The method of producing a steel plate member according to the first embodiment is appropriate, for example, as a method of producing a steel plate member for a vehicle including a hard area that is resistant to shock and a soft area that absorbs shock.

FIG. 1 is a temperature chart showing a method of producing a steel plate member according to the first embodiment. In FIG. 1, the horizontal axis represents time (s), and the vertical axis represents a temperature (°C). As shown in FIG. 1, the method of producing a steel plate member according to the first embodiment includes a quenching step and a partial tempering step. In the method of producing a steel plate member according to the first embodiment, the partial tempering step is performed after the quenching step is performed.

First, in the quenching step, the entire steel plate member is heated at a temperature that is higher than a transformation temperature A3 at which austenitization is completed. The transformation temperature A3 at which austenitization is completed is, for example, 910°C. In this case, the microstructure of the entire steel plate member changes from ferrite and pearlite to an austenite single phase. Then, the steel plate member is cooled at a cooling rate that is higher than an upper critical cooling rate. Thereby, the steel plate member undergoes martensitic transformation, and the microstructure of the entire steel plate member changes to hard martensite. The upper critical cooling rate is a minimum cooling rate at which the microstructure transforms only to martensite.

Here, after the steel plate member is heated, before the steel plate member is cooled, the steel plate member is preferably press-molded. Since hot press forming is performed, it is possible to obtain a high strength steel plate member by quenching after press molding while spring back occurring in cold press forming is restrained. Here, such hot pressing is generally called a hot stamp. Although not particularly limited, as a steel plate for a hot stamp, for example, a steel plate made of manganese and boron steel with a thickness of about 1 mm to 4 mm is used.

Next, in the partial tempering step, only a partial area of the steel plate member is reheated and softened. Specifically, as shown in FIG. 1, a first area 11 of the steel plate member is not reheated, and only a second area 12 of the steel plate member is reheated at a temperature that is higher than a transformation temperature A1 at which austenitization starts and is lower than a transformation temperature A3 at which austenitization is completed. The transformation temperature A1 at which austenitization starts is, for example, 725°C. In this case, a boundary area 13 between the first area 11 and the second area 12 is heated to a temperature that is lower than the transformation temperature A1 at which austenitization starts by heat conduction from the second area 12 and thermally affected. Here, a general tempering temperature is a temperature that is lower than the transformation temperature A1 at which austenitization starts, and a heating temperature in the partial tempering step according to the first embodiment is a temperature higher than the general tempering temperature.

Then, the steel plate member is cooled at a cooling rate lower than a lower critical cooling rate so that the second area 12 does not undergo martensitic transformation. In this case, as indicated by a dashed arrow in FTG. 1, after the change from austenite to ferrite and pearlite is completed, rapid cooling may be performed. When rapid cooling is performed, since a time for producing the steel plate member is shortened, it is possible to improve the production efficiency. The lower critical cooling rate is a minimum cooling rate at which martensite appears for the first time.

Here, FIG. 1 schematically shows a transformation temperature Ms at which martensitic transformation starts and a transformation temperature Mf at which martensitic transformation ends in a continuous cooling transformation (CCT) diagram and a nose point of a time-temperature-transformation diagram of ferrite/pearlite. That is, FIG. 1 schematically shows a case in which the second area 12 reheated at a temperature between the transformation temperature A1 at which austenitization starts and the transformation temperature A3 at which austenitization is completed is cooled at a cooling rate that is lower than the lower critical cooling rate.

Here, FIG. 2 is a schematic plan view showing a change in a microstructure of the steel plate member in the partial tempering step. First, a microstructure of a steel plate member 10 before the partial tempering step shown on the left side in FIG. 2, that is, after the quenching step, will be described. As shown on the left side in FIG. 2, the entire microstructure of the steel plate member 10 before the partial tempering step is composed of martensite M.

Next, the microstructure of the steel plate member 10 during heating in the partial tempering step shown in the center in FIG. 2 will be described. As shown in the temperature chart in FIG. 1, during heating in the partial tempering step, only the second area 12 of the steel plate member 10 is reheated at a temperature that is higher than the transformation temperature A1 at which austenitization starts and is lower than the transformation temperature A3 at which austenitization is completed.

Thus, as shown in the center in FIG. 2, during heating in the partial tempering step, in the second area 12, the martensite M changes to tempered martensite TM and a part of the tempered martensite TM additionally changes to austenite A. That is, the microstructure of the second area 12 is a mixed structure of the tempered martensite TM and the austenite A. Here, in the vicinity of the boundary area 13 in the second area 12, since a heating temperature approaches the transformation temperature A1 at which austenitization starts, an amount of the austenite A decreases, and an amount of the tempered martensite TM increases. Here, the tempered martensite TM in this specification generally refers to martensite M that is softened by reheating and includes troostite and sorbate.

On the other hand, the first area 11 of the steel plate member 10 is an area that is not reheated and is not thermally affected. Thus, the microstructure of the first area 11 does not change from the martensite M. Here, the boundary area 13 between the first area 11 and the second area 12 is heated at a temperature that is lower than the transformation temperature A1 at which austenitization starts by heat conduction from the second area 12 and is thermally affected. Thus, the microstructure of the boundary area 13 changes from the martensite M to the tempered martensite TM.

More specifically, in the boundary area 13, when a distance from the second area 12 is shorter, it is heated at a temperature closer to the transformation temperature A1 at which austenitization starts. Thus, the microstructure on the side of the second area 12 which is most of the boundary area 13 is composed of only the tempered martensite TM. Here, in the vicinity of the first area 11 in the boundary area 13, the tempered martensite TM and the martensite M coexist, and toward the first area 11 composed of only the martensite M, an amount of the tempered martensite TM decreases and an amount of the martensite M increases. Note that, this part of the boundary area 13 in which the tempered martensite TM and the martensite M coexist is not specifically shown in FIG. 2. In this manner, when a distance from the second area 12 is shorter, since the tempered martensite TM heated at a high temperature is included, the boundary area 13 gradually becomes soft from the side of the hard first area 11 toward the side of the soft second area 12.

Next, a microstructure of the steel plate member 10 after the partial tempering step shown on the right side in FIG. 2 will be described. As shown in FIG. 1, when cooling is performed in the partial tempering step, the steel plate member 10 is cooled at a cooling rate lower than the lower critical cooling rate. Thus, as shown on the right side in FIG. 2, the austenite A of the second area 12 appearing during heating changes to ferrite F and pearlite P (ferrite/pearlite FP). As a result, the microstructure of the second area 12 is a mixed structure of the tempered martensite TM and the ferrite/pearlite FP. The microstructure of the first area 11 does not change from the martensite M. The microstructure of the boundary area 13 also does not change from the tempered martensite TM.

Here, when the second area 12 is reheated to a temperature that is higher than the transformation temperature A3 at which austenitization is completed, the second area 12 after cooling becomes a microstructure composed of only ferrite/pearlite FP and sufficient strength is not obtained. Thus, a temperature of the second area 12 before cooling is set to be lower than the transformation temperature A3 at which austenitization is completed during reheating so that an area composed of only the ferrite/pearlite FP does not occur in the second area 12.

### 1-2. Configuration of steel plate member

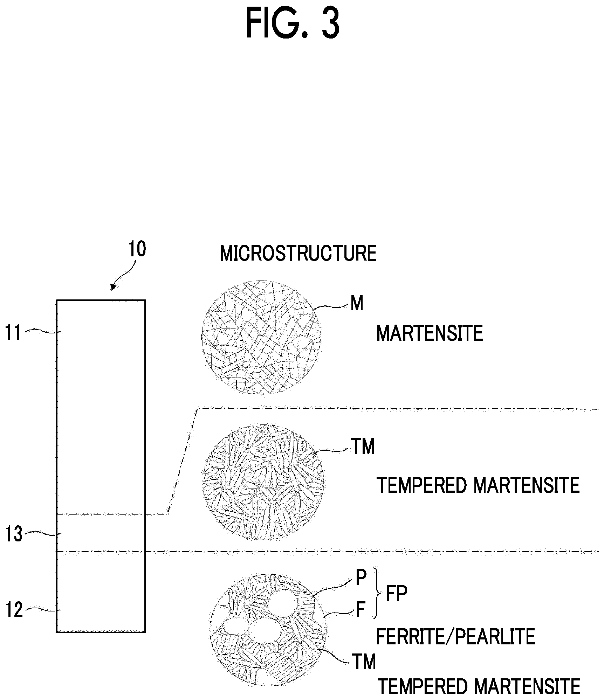

Next, a steel plate member according to the first embodiment will be described with reference to FIG. 3. FIG. 3 is a schematic plan view of the steel plate member according to the first embodiment. The steel plate member according to the first embodiment is a steel plate member produced using the method of producing a steel plate member according to the first embodiment shown in FIG. 1.

As shown in FIG. 3, the steel plate member 10 according to the first embodiment includes the first area 11, the second area 12, and the boundary area 13. FIG. 3 schematically shows microstructures of the first area 11, the second area 12, and the boundary area 13. Here, the microstructure of the steel plate member 10 shown in FIG. 3 matches the microstructure of the steel plate member 10 after the partial tempering step shown on the right side in FIG. 2.

As shown in FIG. 3, the first area 11 is a hard area composed of hard martensite M. The second area 12 is a soft area composed of soft ferrite F and pearlite P (ferrite/pearlite FP) and soft tempered martensite TM. The boundary area 13 is formed between the first area 11 and the second area 12. The side on the second area 12 which is most of the boundary area 13 has a microstructure composed of only the tempered martensite TM. Here, in the vicinity of the first area 11 in the boundary area 13, the tempered martensite TM and the martensite M coexist, and toward the first area 11, an amount of the tempered martensite TM decreases and an amount of the martensite M increases.

### 1-3. Steel plate member according to comparative example and method of producing the same

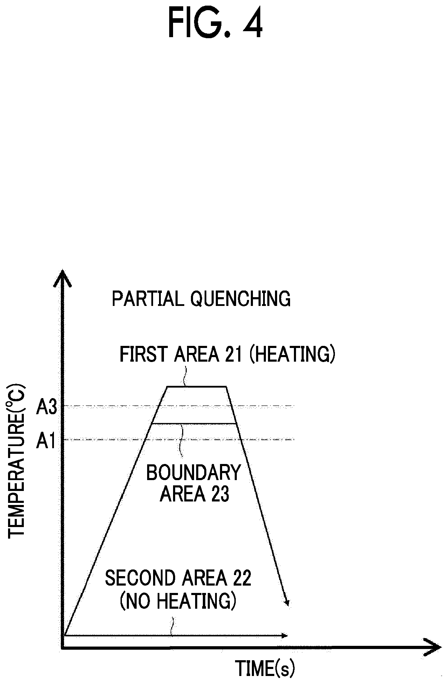

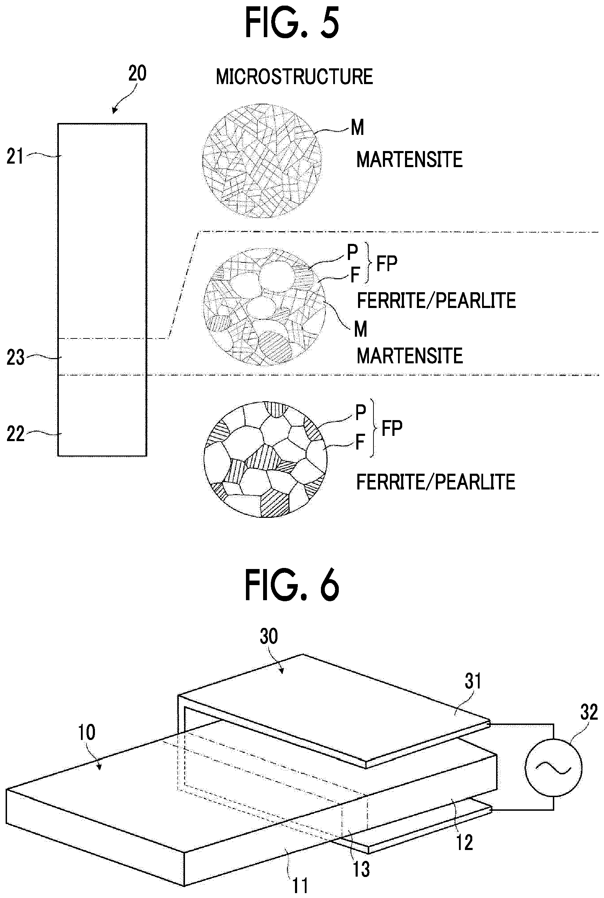

Here, a steel plate member according to a comparative example of the first embodiment and a method of producing the same will be described with reference to FIG. 4 and FIG. 5. FIG. 4 is a temperature chart showing a method of producing a steel plate member according to the comparative example of the first embodiment. FIG. 5 is a schematic plan view of the steel plate member according to the comparative example of the first embodiment. First, the method of producing a steel plate member according to the comparative example will be described with reference to FIG. 4. In FIG. 4, the horizontal axis represents time (s) and the vertical axis represents a temperature (°C). As shown in FIG. 4, the method of producing a steel plate member according to the comparative example includes only a partial quenching step.

In the partial quenching step, only a partial area of the steel plate member is heated to a temperature that is higher than the transformation completion temperature A3 at which austenitization is completed. Specifically, as shown in FIG. 4, a second area 22 of the steel plate member is not heated and only a first area 21 of the steel plate member is heated to a temperature higher than the transformation completion temperature A3 at which austenitization is completed. Thus, the microstructure of the first area 21 changes from ferrite and pearlite to an austenite single phase. Here, the second area 22 includes an area heated to a temperature lower than the transformation temperature A1 at which austenitization starts. The microstructure of the second area 22 does not change from ferrite and pearlite.

Then, a boundary area 23 between the first area 21 and the second area 22 is heated to a temperature that is higher than the transformation temperature A1 at which austenitization starts and is lower than the transformation temperature A3 at which austenitization is completed by heat conduction from the second area 22. Thus, in the microstructure of the boundary area 23, a part of ferrite and pearlite changes to austenite. That is, the microstructure of the boundary area 23 is a mixed structure of ferrite/pearlite and austenite.

Then, the steel plate member is cooled at a cooling rate higher than the upper critical cooling rate. Therefore, the entire austenite undergoes martensitic transformation, and the microstructure of the first area 21 changes to hard martensite. In addition, the microstructure of the boundary area 23 is a mixed structure of soft ferrite and pearlite and hard martensite. Here, the microstructure of the second area 22 does not change from ferrite and pearlite.

Next, the steel plate member according to the comparative example of the first embodiment will be described with reference to FIG. 5. The steel plate member according to the comparative example is a steel plate member produced using the method of producing a steel plate member according to the comparative example shown in FIG. 4. As shown in FIG. 5, a steel plate member 20 according to the comparative example includes the first area 21, the second area 22, and the boundary area 23. FIG. 5 schematically shows microstructures of the first area 21, the second area 22, and the boundary area 23.

As shown in FIG. 5, the first area 21 is a hard area composed of hard martensite. The second area 22 is a soft area composed of soft ferrite F and pearlite P (ferrite/pearlite FP). The boundary area 23 is formed between the first area 21 and the second area 22 and has a mixed structure of soft ferrite/pearlite FP and hard martensite M.

In this manner, in the steel plate member 20 according to the comparative example, the boundary area 23 has an unstable microstructure in which hard martensite M and soft ferrite/pearlite FP coexist. Thus, cracks are likely to occur in a boundary area between the hard area and the soft area.

### 1-4. Effects according to steel plate member according to first embodiment and method of producing the same

Next, effects according to a steel plate member according to the first embodiment and a method of producing the same will be described. As described above, in the steel plate member 20 according to the comparative example shown in FIG. 5, the boundary area 23 has an unstable microstructure in which hard martensite M and soft ferrite/pearlite FP coexist. On the other hand, in the steel plate member 10 according to the first embodiment, as shown in FIG. 3, the boundary area 13 has a microstructure composed of only tempered martensite TM. Thus, it is possible to restrain the occurrence of cracks in the boundary area 13 between the hard first area 11 and the soft second area 12. Here, in the vicinity of the first area 11 in the boundary area 13, while the tempered martensite TM and the martensite M coexist, since a hardness difference between them when they are adjacent to each other is small, the occurrence of cracks can be restrained.

In addition, in the boundary area 13 of the steel plate member 10 according to the first embodiment, when a distance from the second area 12 heated in the partial tempering step is shorter, since it is heated at a higher temperature, the area becomes soft. That is, the boundary area 13 of the steel plate member 10 according to the first embodiment gradually becomes soft from the side of the hard first area 11 toward the side of the soft second area 12. Therefore, it is possible to more effectively restrain the occurrence of cracks in the boundary area 13 between the hard first area 11 and the soft second area 12.

Here, in the steel plate member 10 according to the first embodiment, the second area 12 which is a soft area has a microstructure in which ferrite/pearlite FP and tempered martensite TM coexist. However, since the ferrite/pearlite FP and the tempered martensite TM are also soft, cracks are unlikely to occur in the second area 12.

### 2. Second embodiment

Next, a method of producing a steel plate member according to a second embodiment will be described with reference to FIG. 6. FIG. 6 is a schematic perspective view of an induction heating device used in the method of producing a steel plate member according to the second embodiment. In the method of producing a steel plate member according to the first embodiment, a method of heating the steel plate member 10 in the partial tempering step is not particularly limited. On the other hand, in the method of producing a steel plate member according to the second embodiment, an induction heating device 30 shown in FIG. 6 is used to heat the steel plate member 10 in the partial tempering step. Since the other parts are the same as those in the first embodiment, detailed descriptions thereof will be omitted.

As shown in FIG. 6, the induction heating device 30 is a high frequency induction heating device including a coil 31 and a high frequency power supply 32. As shown in FIG. 6, the coil 31 is a plate-like member having a U-shaped horizontal cross section. The high frequency power supply 32 is connected to both open ends of the coil 31. Only the second area 12 of the steel plate member 10 is inserted into the coil 31 and is induction-heated to a temperature that is higher than the transformation temperature A1 at which austenitization starts and is lower than the transformation temperature A3 at which austenitization is completed. Since the first area 11 of the steel plate member 10 is exposed out of the coil 31, it is not induction-heated and is not thermally affected by heat conduction from the second area 12. On the other hand, the boundary area 13 between the first area 11 and the second area 12 is heated to a temperature lower than the transformation temperature A1 at which austenitization starts by heat conduction from the second area 12 and is thermally affected.

Here, in high frequency induction heating, since the heating efficiency sharply decreases at a Curie point at which the steel plate member 10 loses its magnetism, it is difficult to increase the heating temperature near the Curie point. Since austenite is nonmagnetic, and martensite, ferrite and pearlite are ferromagnetic, the Curie point is between the transformation temperature A1 at which austenitization starts and the transformation temperature A3 at which austenitization is completed.

Therefore, when high frequency induction heating is used, it is possible to quickly heat only the second area 12 of the steel plate member 10 and it is possible to easily and accurately maintain the temperature that is higher than the transformation temperature A1 at which austenitization starts and is lower than the transformation temperature A3 at which austenitization is completed. Since it is possible to quickly heat only the second area 12 of the steel plate member 10, it is possible to narrow the boundary area 13 that is thermally affected by heat conduction from the second area 12.

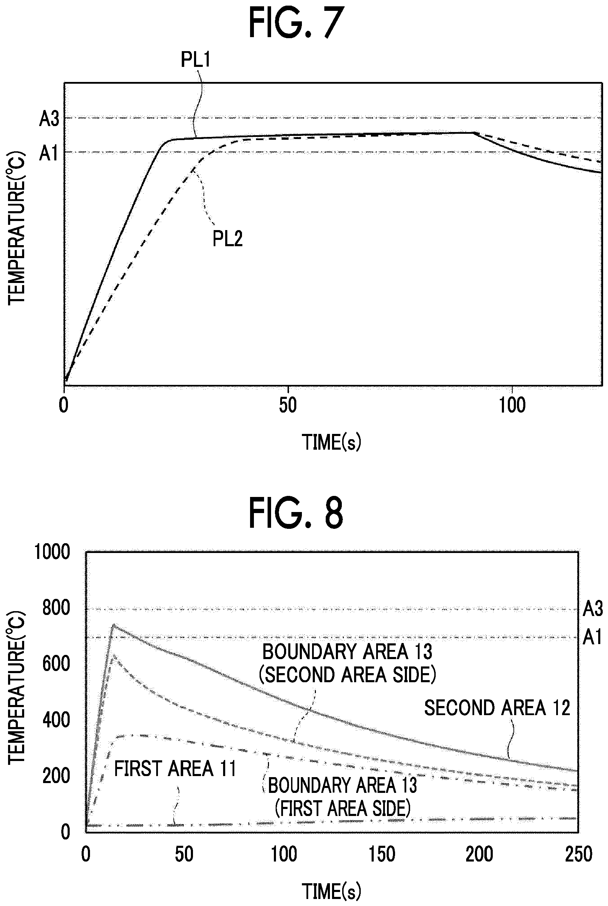

FIG. 7 is a temperature chart of induction heating of steel plates with different thicknesses. The horizontal axis represents time and the vertical axis represents a temperature. Steel plates PL1 and PL2 are both steel plates for a hot stamp made of manganese and boron steel (22MnB5 steel). Here, the steel plate PL2 is about 1 mm thicker than the steel plate PL1. Thus, compared to the steel plate PL1, it takes longer to heat the steel plate PL2. However, when high frequency induction heating is used, it is possible to quickly heat both of the steel plates PL1 and PL2. In addition, when high frequency induction heating is used, it is possible to easily and accurately maintain both of the steel plates PL1 and PL2 with different thicknesses at a temperature that is higher than the transformation temperature A1 at which austenitization starts and is lower than the transformation temperature A3 at which austenitization is completed.

### 2-1. Examples

An example of the second embodiment in which a steel plate member is induction-heated in partial tempering will be described below. As a steel plate member, a quenched component of a steel plate for a hot stamp made of manganese and boron steel (22MnB5 steel) and with a thickness of 2.0 mm, a width of 100 mm, and a length of 300 mm is used. FIG. 8 is a temperature chart showing conditions of partial tempering according to the example of the second embodiment. The horizontal axis represents time and the vertical axis represents a temperature. FIG. 8 shows a temperature profile in four areas: the first area 11, the second area 12, the boundary area 13 (first area side), and the boundary area 13 (second area side). As shown in FIG. 8, only the second area 12 of the steel plate member is heated to a temperature that is higher than the transformation temperature A1 at which austenitization started and is lower than the transformation temperature A3 at which austenitization is completed and the steel plate member is then cooled at a cooling rate lower than the upper critical cooling rate so that the second area 12 does not undergo martensitic transformation.

As will be described in detail below, as a result of the partial tempering performed according to the example, a hard area composed of the martensite M is formed in the first area 11 shown in FIG. 8. In the second area 12 shown in FIG. 8, a soft area composed of ferrite/pearlite FP and tempered martensite TM is formed. The boundary area 13 on the side of the first area and the boundary area 13 on the side of the second area shown in FIG. 8 both have a microstructure composed of only the tempered martensite TM. On the other hand, the hardness of the boundary area 13 on the side of the second area heated to a higher temperature is lower than the hardness of the boundary area 13 on the side of the first area.

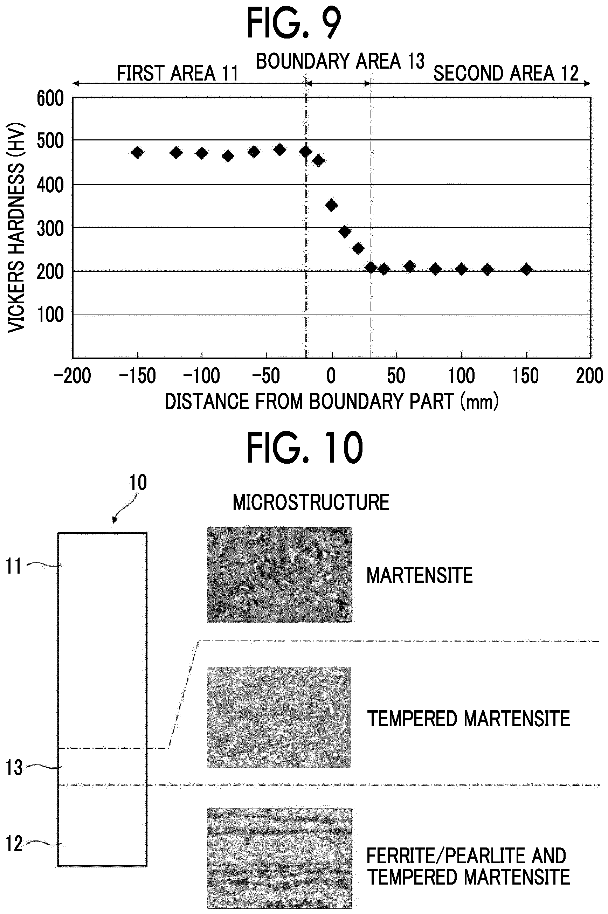

FIG. 9 and FIG. 10 show the hardness distribution of the steel plate member produced using the method of producing a steel plate member according to the example of the second embodiment and microstructure pictures. FIG. 9 is a graph showing the hardness distribution of the steel plate member produced using the method of producing a steel plate member according to the second embodiment. FIG. 10 shows microstructure pictures of the steel plate member produced using the method of producing a steel plate member according to the second embodiment.

As shown in FIG. 9, the boundary area 13 is formed between the hard first area 11 having a high Vickers hardness (HV) and the soft second area 12 having a low Vickers hardness (HV). As shown in FIG. 9, when high frequency induction heating is used, the boundary area 13 that is thermally affected by heat conduction from the second area 12 is narrowed to about 50 mm. In addition, it is found that the boundary area 13 is gradually softened from the side of the hard first area 11 toward the side of the soft second area 12.

In addition, as shown in FIG. 10, the microstructure of the first area 11 is a structure composed of only martensite. The microstructure of the second area 12 is a mixed structure of ferrite/pearlite and tempered martensite. The boundary area 13A has a microstructure composed of only tempered martensite. That is, the same microstructure as the microstructure shown in FIG. 3 is actually obtained.

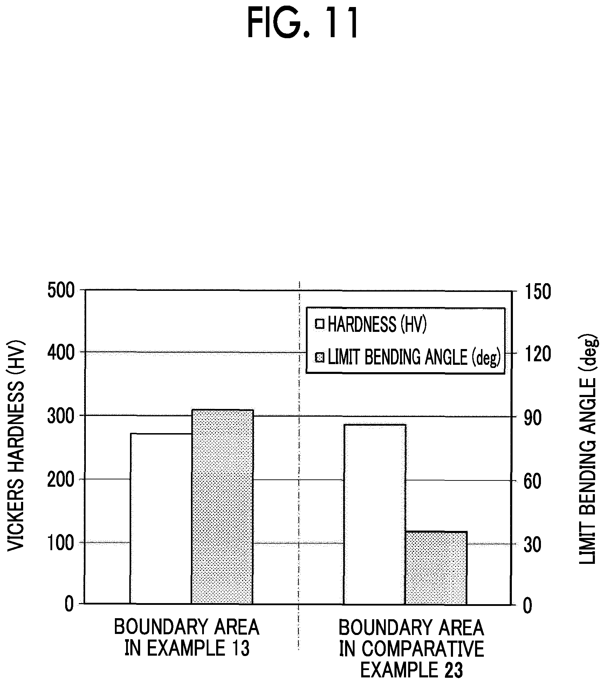

FIG. 11 is a comparison graph showing the hardness and limit bending angle of the boundary area 13 of the steel plate member according to the example and the boundary area 23 of the steel plate member according to the comparative example. A bending test for obtaining a limit bending angle (deg) is performed according to VDA238-100, standards of German Association of the Automotive Industry. As shown in FIG. 11, the Vickers hardness (HV) of the boundary area 13 in the example is the same as the Vickers hardness (HV) of the boundary area 23 in the comparative example.

On the other hand, as shown in FIG. 11, the limit bending angle (deg) of the boundary area 13 in the example is twice or more as large as the limit bending angle (deg) of the boundary area 23 in the comparative example and the bendability is significantly improved. As described with reference to FIG. 5, since the boundary area 23 in the comparative example has an unstable microstructure in which the hard martensite M and the soft ferrite/pearlite FP coexisted, the bendability deteriorated. On the other hand, it is thought that, since the boundary area 13 in the example has a structure composed of only tempered martensite, the bendability is excellent.

Here, the present invention is not limited to the above embodiments, and can be appropriately changed without departing from the spirit and scope the invention.

## Claims

1. A method of producing a steel plate member comprising:
quenching a steel plate by heating the steel plate to a temperature which is higher than a first transformation temperature (A3) at which austenitization is completed and then cooling the steel plate at a cooling rate higher than an upper critical cooling rate;
reheating a second area (12) of the steel plate, without reheating a first area (11) of the steel plate, to a temperature which is higher than a second transformation temperature (A1), at which austenitization starts, and is lower than the first transformation temperature (A3); and
cooling the reheated steel plate at a cooling rate lower than a lower critical cooling rate to obtain the steel plate member in which a hard area composed of martensite (M) is formed in the first area (11), a soft area containing tempered martensite (TM) in addition to ferrite (F) and pearlite (P) is formed in the second area (12), and an area composed of only tempered martensite (TM) is formed in a third area (13) between the first area (11) and the second area (12).

2. The method of producing the steel plate member according to claim 1, wherein the second area (12) of the steel plate is reheated by induction heating.

3. The method of producing the steel plate member according to claim 1 or 2, wherein, after the steel plate is heated, a press processing is performed on the steel plate before the steel plate is cooled during quenching.

4. The method of producing the steel plate member according to any one of claims 1 to 3, wherein:
the third area (13) is heated to a temperature which is lower than the second transformation temperature (A1) by heat conduction from the second area (12) being reheated; and
a structure of the third area (13) changes from martensite (M) to tempered martensite (TM).

5. A steel plate member comprising:
a hard area composed of martensite (M);
a soft area containing ferrite (F) and pearlite (P); and
a third area (13) which is formed between the hard area and the soft area, wherein: the soft area further contains tempered martensite (TM); and
the third area (13) includes an area composed of only tempered martensite (TM).

## Patentansprüche

1. Verfahren zum Herstellen eines Stahlplattenelements, umfassend:
Abschrecken einer Stahlplatte durch Erhitzen der Stahlplatte auf eine Temperatur, die höher ist als eine erste Transformationstemperatur (A3), bei der die Austenitisierung abgeschlossen ist, und dann Abkühlen der Stahlplatte mit einer Abkühlgeschwindigkeit, die höher ist als eine obere kritische Abkühlgeschwindigkeit;
erneutes Erhitzen eines zweiten Bereichs (12) der Stahlplatte, ohne einen ersten Bereich (11) der Stahlplatte erneut zu erhitzen, auf eine Temperatur, die höher ist als eine zweite Transformationstemperatur (A1), bei der die Austenitisierung beginnt, und niedriger ist als die erste Transformationstemperatur (A3); und
Abkühlen der erneut erhitzten Stahlplatte mit einer Abkühlgeschwindigkeit, die niedriger ist als eine untere kritische Abkühlgeschwindigkeit, um das Stahlplattenelement zu erhalten, in dem ein harter Bereich, der aus Martensit (M) besteht, in dem ersten Bereich (11) gebildet ist, ein weicher Bereich, der zusätzlich zu Ferrit (F) und Perlit (P) angelassenen Martensit (TM) enthält, in dem zweiten Bereich (12) gebildet ist, und ein Bereich, der nur aus angelassenem Martensit (TM) besteht, in einem dritten Bereich (13) zwischen dem ersten Bereich (11) und dem zweiten Bereich (12) gebildet ist.

2. Verfahren zum Herstellen des Stahlplattenelements nach Anspruch 1, wobei der zweite Bereich (12) der Stahlplatte durch Induktionserhitzung erneut erhitzt wird.

3. Verfahren zum Herstellen des Stahlplattenelements nach Anspruch 1 oder 2, wobei, nachdem die Stahlplatte erhitzt wurde, eine Druckverarbeitung auf der Stahlplatte durchgeführt wird, bevor die Stahlplatte während des Abschreckens abgekühlt wird.

4. Verfahren zum Herstellen des Stahlplattenelements nach einem der Ansprüche 1 bis 3, wobei:
der dritte Bereich (13) durch Wärmeleitung von dem zweiten Bereich (12), der erneut erhitzt wird, auf eine Temperatur erhitzt wird, die niedriger ist als die zweite Transformationstemperatur (A1); und
eine Struktur des dritten Bereichs (13) sich von Martensit (M) zu angelassenem Martensit (TM) verändert.

5. Stahlplattenelement, umfassend:
einen harten Bereich, der aus Martensit (M) besteht;
einen weichen Bereich, der Ferrit (F) und Perlit (P) enthält; und
einen dritten Bereich (13), der zwischen dem harten Bereich und dem weichen Bereich gebildet ist, wobei: der weiche Bereich ferner angelassenen Martensit (TM) enthält; und
der dritte Bereich (13) einen Bereich umfasst, der nur aus angelassenem Martensit (TM) besteht.

## Revendications

1. Procédé de production d'un élément tôle en acier comprenant :
la trempe d'une tôle en acier par le chauffage de la tôle en acier jusqu'à une température qui est supérieure à une première température de transformation (A3) à laquelle l'austénitisation est complète, puis le refroidissement de la tôle en acier à une vitesse de refroidissement supérieure à une vitesse de refroidissement critique supérieure ;
le réchauffage d'une deuxième zone (12) de la tôle en acier, sans réchauffer une première zone (11) de la tôle en acier, jusqu'à une température qui est supérieure à une deuxième température de transformation (A1), à laquelle l'austénitisation commence, et est inférieure à la première température de transformation (A3) ; et
le refroidissement de la tôle en acier réchauffée à une vitesse de refroidissement qui est inférieure à une vitesse de refroidissement critique inférieure pour obtenir un élément tôle en acier dans lequel une zone dure composée de martensite (M) est formée dans la première zone (11), une zone molle contenant de la martensite revenue (TM) en plus de ferrite (F) et de perlite (P) est formée dans la deuxième zone (12), et une zone composée de martensite revenue (TM) seule est formée dans une troisième zone (13) entre la première zone (11) et la deuxième zone (12).

2. Procédé de production de l'élément tôle en acier selon la revendication 1, dans lequel la deuxième zone (12) de la tôle en acier est réchauffée par chauffage par induction.

3. Procédé de production de l'élément tôle en acier selon la revendication 1 ou 2, dans lequel, après chauffage de la tôle en acier, un traitement à la presse est réalisé sur la tôle en acier avant le refroidissement de la tôle en acier pendant la trempe.

4. Procédé de production de l'élément tôle en acier selon l'une quelconque des revendications 1 à 3, dans lequel :
la troisième zone (13) est chauffée jusqu'à une température qui est inférieure à la deuxième température de transformation (A1) par conduction de chaleur depuis la deuxième zone (12) en cours de réchauffage ; et
une structure de la troisième zone (13) change de martensite (M) à martensite revenue (TM).

5. Élément tôle en acier comprenant :
une zone dure de martensite (M) ;
une zone molle contenant de la ferrite (F) et de la perlite (P) ; et
une troisième zone (13) qui est formée entre la zone dure et la zone molle, dans lequel : la zone molle contient en outre de la martensite revenue (TM) ; et
la troisième zone (13) comporte une zone composée de martensite revenue (TM) seule.
